# EUROPEAN PATENT SPECIFICATION

(11) **EP 1 507 657 B1**
(45) Date of publication and mention of the grant of the patent: **20.12.2006**
(21) Application number: 03728488.2
(22) Date of filing: 23.04.2003
(51) Int. Cl.: B32B 27/08, B32B 27/32, B32B 27/36, B32B 27/30, B32B 27/28, B32B 25/08

(54) **MULTILAYER STORAGE CONTAINER**
MEHRSCHICHTIGER AUFBEWAHRUNGSBEHÄLTER
CONTENEUR DE STOCKAGE A COUCHES MULTIPLES

(30) Priority: 23.05.2002 US 382757 P; 12.03.2003 US 387166
(43) Date of publication of application: 23.02.2005
(73) Proprietor: Rubbermaid Incorporated, Wooster, Ohio 44691-6000 (US)
(72) Inventor: SHEPLER, William, North Olmsted, OH 44070 (US); RODI, Gina, Wooster, OH 44691 (US)
(74) Representative: Winkler, Andreas Fritz Ernst
(86) International application number: PCT/US2003/012504
(87) International publication number: WO 2003/099560

(56) References cited:
- DATABASE WPI Section Ch, Week 199420 Derwent Publications Ltd., London, GB; Class A17, AN 1994-163538 XP002246240 & JP 06 106606 A (TOPPAN PRINTING CO LTD), 19 April 1994 (1994-04-19)
- DATABASE WPI Section Ch, Week 200001 Derwent Publications Ltd., London, GB; Class A17, AN 2000-006728 XP002246241 & JP 11 286087 A (ASAHI KASEI KOGYO KK), 19 October 1999 (1999-10-19)

## Description

### BACKGROUND

### Technical Field

The invention relates generally to reusable plastic storage containers. More specifically, the invention relates to reusable plastic storage containers having a multiple layer structure. Still more specifically, the invention relates to reusable plastic storage containers having a multiple layer structure including a middle layer disposed between inner and outer layers. The middle layer is designed to provide structural integrity and stacking strength to the container and, accordingly, is fabricated from a polymeric material having a high stiffness. Further, because impact strength is not important to the middle layer, the middle layer may be fabricated from a material having a low impact strength. In contrast, the inner and outer layers are not designed to provide structural integrity to the container and, accordingly, can be fabricated from polymeric materials having a relatively low stiffness. Further, because the inner and outer layers provide the aesthetic look and feel of the container, they should have a high impact strength so that they are resistant to cracking and shattering. Further, the inner and outer layers can be designed to provide a soft feel, which is preferred by consumers.

### Description of Related Art

Reusable storage containers are known. One common type of reusable storage containers is fabricated from molded plastic in the form of an open-top box with a molded plastic lid. Such containers come in a variety of styles and colors.

One problem associated with currently available reusable storage containers relates to their single layer or single polymeric component structure. Specifically, it is desirable that the inner and outer surfaces of a reusable polymeric storage container be resistant to cracking and shattering (i.e., have high impact strength) so that they provide an appropriate aesthetic appearance, which is desired by consumers. However, reusable storage containers must also have sufficient structural integrity. Therefore, the single material chosen to fabricate the container must possess a high stiffness coefficient or characteristic in addition to high impact strength.

The problem arises from the competing characteristics of high impact strength and high stiffness. Specifically, commodity materials, such as polyethylenes, polypropylenes and polystyrenes, typically meet only one of these criteria. For example, low density polyethylene (LDPE) and linear low density polyethylene (LLDPE) are noted for their high impact strength, but these materials do not provide sufficient stiffness at moderate thicknesses. Consequently, if these high impact strength commodity materials are used to manufacture reusable storage containers, the container must be fabricated with a sufficient thickness to provide the requisite stiffness or structural integrity, which increases the container weight and cost of fabrication. Accordingly, such single layer containers comprising high impact strength commodity material are undesirable because consumers prefer a low cost, lightweight container.

Commodity polymeric materials that provide high stiffness such as high density polyethylene (HDPE) can be used to fabricate reusable storage containers with a relatively thin wall thickness, which results in a low cost, lightweight container. However, high stiffness commodity materials are susceptible to scratching and cracking. Further, high stiffness commodity materials such as high density polyethylene have a relatively hard feel. Accordingly, such single layer containers comprising high stiffness commodity materials are undesirable because consumers prefer aesthetically appealing containers (that do not scratch or crack easily) having a soft feel.

JP-A-6106606 discloses a laminated container comprising in the following order, from outside to inside: a first layer in the outer most position made of a polyethylene terephthalate resin, a second layer of unspecified adhesive resin, a third layer comprising a mixture of recycled material from said laminate and a high density polyethylene resin, and a fourth layer in the inner most position of low density polyethylene or linear low density polyethylene.

JP-A-11286087 discloses a laminated container comprising in the following order: a first layer made of a low density polyethylene resin, a second layer of a high density polyethylene resin and a third layer made either of an unspecified resin or of high density polyethylene.

To solve the problem of the competing requirements of high impact strength/soft feel and high stiffness, the use of high performance engineering resins such as nylons and polycarbonates has been proposed. However, the material costs of high performance resins are substantially higher than the various polyethylenes, polypropylenes, and polystyrenes that are readily available and known as "commodity" resins. Thus, the use of high performance engineering resins would substantially increase the cost of a reusable storage container, which would adversely affect the price point and competitiveness of such a product.

### SUMMARY OF THE DISCLOSURE

An economical, reusable, three-dimensional storage container is disclosed.

The storage container of the present invention comprises a middle layer comprising a polymeric material selected from the group consisting of high density polyethylenes, high density polyethylenes filled with calcium carbonate, and mixtures thereof. The container further comprises inner and outer layers which are tied to opposing sides of the middle layer. The inner and outer layers may be the same or different polymeric materials selected from the group consisting of low density polyethylenes, linear low density polyethylenes, and mixtures thereof.

In a further refinement, the inner, middle, and outer layers are coextruded and blow molded.

In another refinement, one or both of the inner and outer layers further comprises a colorant.

In yet another refinement, the middle layer is thicker than either the inner or outer layers. In a further refinement, a ratio of the thickness of the middle layer to a combined thickness of the inner and outer layers ranges from about 1:1 to about 4:1.

In still a further refinement, the disclosed container is formed by co-extrusion blow molding using separate parisons for the inner, middle, and outer layers.

In yet a further refinement, the middle layer may comprise scrap polymeric material from the inner and outer layers. Specifically, scrap material from a co-extrusion blow molding process used to form the container can be recycled back into the middle layer. Obviously, scrap material from the middle layer may be used in the middle layer of a successive container. Additionally, scrap material from the inner and outer layers, although different polymeric material than the middle layer, can be blended with the material of the middle layer and used to fabricate a middle layer of another container.

An economical, reusable, three-dimensional storage container is disclosed which includes three layers, including a middle layer comprising a commodity polymeric material having a high stiffness characteristic. The polymeric material of the middle layer does not need superior high impact strength characteristics because it is disposed between inner and outer layers. In contrast, the inner and outer layers are fabricated from a commodity polymeric material having high impact strength characteristics. The inner and outer layers are thinner than the middle layer, and therefore, do not supply a great proportion of the structural integrity of the container. Thus, the inner and outer layers can be fabricated from a commodity polymeric material with a high impact strength characteristic, but a low stiffness characteristic.

In a further refinement, the inner and outer layers can be specifically fabricated from a commodity polymeric material having good impact strength, but low stiffness, which thereby provides the inner and outer layers with a soft feel desired by consumers. To satisfy this criterion, low density polyethylenes, linear low density polyethylenes, and mixtures thereof can be used for the inner and outer layers. To provide the needed structural integrity, the middle layer is fabricated from a commodity polymeric material with a high stiffness characteristic namely high density polyethylenes, high polyethylenes filled with calcium carbonate, and mixtures thereof.

The container and a top or lid for the container can be fabricated in accordance with the three-layer structures described above. One method of fabrication is a co-extrusion blow molding process. However, the three-layer structure may be provided in a sheet form, and subsequently molded into the three-dimensional container and/or lid.

The outer layers may be colored or, in the alternative, the middle layer may be colored with the outer layers uncolored for certain visual effects. Additional layers may be added depending upon performance requirements. A clear "view strip" may be incorporated to enable the consumer to see inside the container.

The disclosed containers may be fabricated using a co-injection molding process, whereby an injection mold is used to form the container and/or lid and the materials are co-injected into the mold to form separate skins. Also, the container and/or lid can be fabricated using an overmolding process, whereby one of the layers is molded first and the other layers are molded over the previously molded structure. Conventional injection molding and thermal molding may also be utilized. Further, injection molding and blow molding techniques may be combined by injection molding a preform, which is transferred to a blow mold, and inflated to form an outer structure with inner structures or layers blown into the outer structure. The process can be repeated to form as many layers as desired.

Other advantages of the disclosed container and methods will be apparent to those skilled in the art from a review of the following figures and detailed description taken in conjunction with the appended claims.

### BRIEF DESCRIPTION OF THE DRAWINGS

The disclosed container is described diagrammatically in the following drawings wherein:
Fig. 1 is a sectional view of a multilayer material used to fabricate a reusable storage container made in accordance with the disclosure;
Fig. 2 is a front sectional view of a reusable storage container and lid combination made in accordance with the disclosure;
Fig. 3 is an end sectional view of the container shown in Fig. 2;
Fig. 4 is an enlarged partial end view of the container shown in Fig. 2;
Fig. 5 is a top plan view of the container shown in Fig. 2 with the lid removed;
Fig. 6 is a perspective view of the container shown in Fig. 2 with the lid removed;
Fig. 7 is a front sectional view of two reusable storage containers as shown in Fig. 3 stacked one on top of another; and
Fig. 8 is sectional view of three parisons used to fabricate a reusable container in accordance with the disclosure.

The drawings are not necessarily to scale and the embodiments are sometimes illustrated by graphic symbols, phantom lines, diagrammatic representations, and fragmentary views. In certain instances, details which are not necessary for an understanding of the disclosed containers or which may render other details difficult to perceive may have been omitted. It should be understood, of course, that the disclosure and the claims are not necessarily limited to the particular embodiments illustrated herein.

### DETAILED DESCRIPTION OF THE PRESENTLY PREFERRED EMBODIMENTS

An economical, reusable three-dimensional container is provided with inner and outer layers having high impact strength yet a soft feel and a middle layer with a high stiffness, for structural integrity. The disclosed container has the desired characteristics of crack resistance, scratch resistance, shatter resistance, and soft feel on the inner and outer surfaces yet superior structural integrity due to the use of a thicker middle layer, all without resorting to the use of high performance engineering resins such as polycarbonates or nylons which, would substantially increase the cost of the product. Instead, commodity materials such as polypropylenes, polyethylenes, and other low cost commodity polymers can be employed.

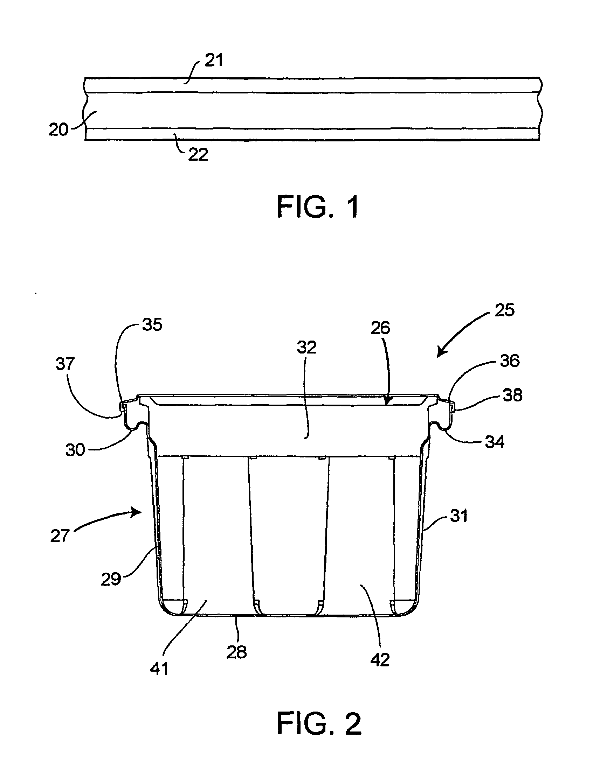

Fig. 1 illustrates a three-layer structure including a first layer 20 tied to a second layer 21 and a third layer 22 tied to the first layer 20 opposite the second layer 21. For sake of clarity, the layer 20 will be referred to as the middle layer 20, the layer 21 will be referred to as the inner layer 21, and the layer 22 will be referred to as the outer layer 22. The middle layer 20, in a preferred embodiment, provides the structural integrity of the resulting container 25 (see Fig. 2). Thus, the middle layer 20 should be fabricated from a commodity resin with a high stiffness characteristic. Because the middle layer 20 is disposed between the inner layer 21 and outer layer 22, high impact resistance is not essential for the middle layer 20 of this embodiment. Thus, while the resin or polymer used for the layer 20 should have a high stiffness characteristic, it can have a low impact strength characteristic. The resins used for the middle layer include, high density polyethylene (HDPE), such as, for example, high density polyethylene filled with calcium carbonate, and mixtures thereof.

In contrast to the middle layer 20, the inner and outer layers 21, 22 should provide good impact resistance qualities to prevent cracking, shattering, and scratch resistance. The polymers used for these layers include, low density polyethylenes (LDPE), linear low density polyethylenes (LLDPE), and mixtures thereof. Low density polyethylenes and linear low density polyethylenes provide a desirable soft feel to the inner and outer surfaces, which are engaged by the user.

Suitable colorants for the outer and inner layers 21, 22 include, but are not limited to, various organic and inorganic pigments dispersed in a polyolefin carrier. In the alternative, the middle layer 20 can be colored and the inner and outer layers 21, 22 left uncolored for a specific visual effect. Further, to reduce the weight of the overall structure formed, foaming agents can be used in the middle layer 20. Suitable foaming agents include, but are not limited to, citric acid mixed with sodium bicarbonate. In addition, fillers may be added to the thicker middle layer 20 to reduce the cooling time of the molded part. One preferred filler is calcium carbonate. Other suitable fillers include, but are not limited to, talc, barium sulfate, mica, glass, clay, titanium dioxide, dolomite, wood flower, and flax.

Other functional properties may be incorporated into the inner and outer layers 22, 21, such as stain resistance. If stain resistance is desired for either layer 22, 21, the layers should incorporate a stain-resistant resin including, but not limited to, polysulphones, polymethylpentenes, polycarbonates, polyetherimides, nylons, polyacrylates, polyphenylsulphides, polyphenylene oxides, polyethersulphones, polyethyleneterephtalates, aromatic polyketones, liquid crystal polymers, and mixtures thereof.

Further, fragrance can be added to any of the layers 20-22. Suitable fragrance include various fragrance oils dispersed in a polyolefin carrier. Further, odor fighting additives, such as sodium bicarbonate can be added to one or more of the resins utilized. Still further, a foaming agent may be incorporated into at least the middle layer 20, and optionally into the outer layers 21, 22, to increase the insulating properties of the resulting container. Also, an anti-microbial agent can be used in any of the layers 20-22, preferably, the inner layer 22.

In the alternative, the function of the middle layer 20 and inner and outer layers 21, 22 can be reversed. That is, the high stiffness characteristic can be incorporated into the inner and outer layers 21, 22, and the impact resistance characteristic can reside in the middle layer 20.

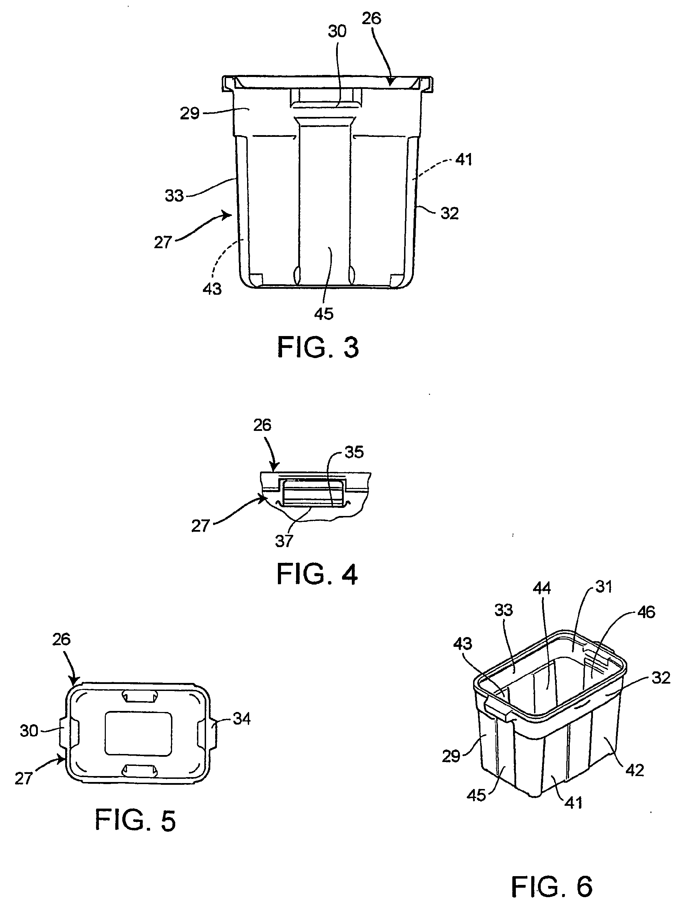

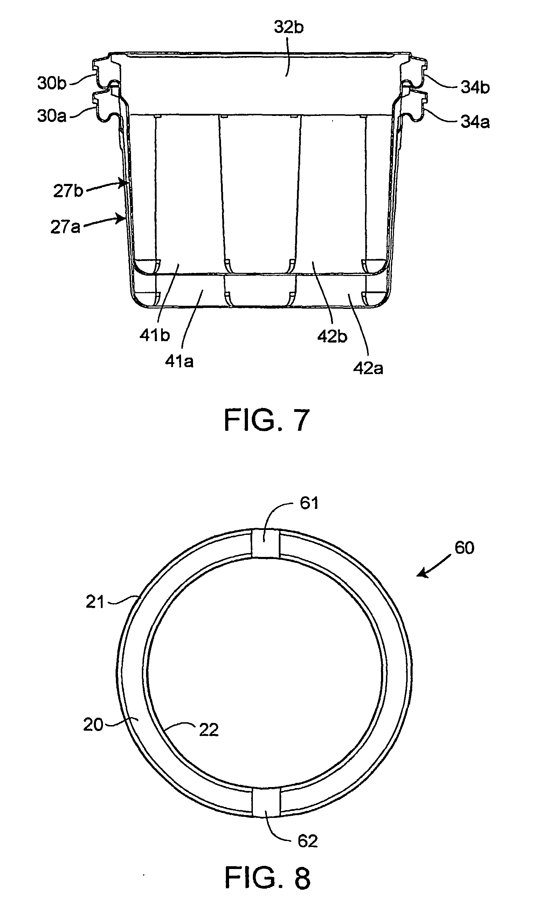

Fig. 2 is a partial elevational/sectional view of a container 25 that can be fabricated from the three-layer structure of Fig. 1. Container 25 includes a lid 26 secured to an open-top container 27. Container 27 includes bottom panel 28 disposed between and connected to opposing end panels 29, 31 as well as side panels 32, 33 (see also Fig. 6). The container portion 27 typically includes handles 30, 34. To enhance sealing, the handles 30, 34 may include a bead 35, 36 around which a lip 37, 38 of the lid 26 is secured to provide a secure engagement. The side panels 32, 33 may also include recessed sections 41-44 (see also Fig. 6). The recess sections 41-44 enhance the structural integrity of the container 27. Further, as discussed below with respect to Fig. 8, the recess sections 41-44 may also serve as a transparent window to make it easy for the consumer to view the contents of the container 27. Similarly, as shown in Figs. 3 and 6, the end panels 29, 31 may also include recesses 45, 46. As shown in Fig. 7, the recesses 41-46 also enhance the stackability of two light container portions 27a, 27b.

Turning to Fig. 8, a preferred method for fabricating the reusable containers disclosed above is a co-extrusion blow molding process. In such a process, a parison 60 as shown in Fig. 8 is co-extruded so that it has an inner layer 20 and outer layers 21, 22 (see Fig. 1). The parison 60 may then be blow molded into a three dimensional article such as the container portion 27 or lid portion 26 of the container assembly 25 shown in Fig. 2. In the embodiment shown in Fig. 8, clear resins are provided at 61, 62 to provide a window at one of the recesses 41-46 of either the side panels 32, 33 or end panels 29, 31, as shown in Figs. 2, 3, and 6-7.

The thickness of the layers 20-22 can vary, depending upon the embodiment. Preferably, the thickness of the layer 20 is at least twice as thick as the layer 21 in a two layer structure or the layer 20 is at least twice as thick as the combined thicknesses of the layers 21, 22 in a three-layer structure. Suitable ratios of the thickness of the layer 20 to the combined thicknesses of the layers 21, 22 can range from about 1:1 to about 4:1, and more preferably, from about 3:2 to about 4:1.

As noted above, a preferred way to fabricate the container 25 is using a co-extrusion blow molding process with the parison 60 shown in Fig. 8. As the mold closes, capturing the parisons, the parisons are inflated with air to form either the container portion 27 or top portion 26. Once the part 27 or 26 is formed, the resulting part wall structure is a sandwich of the three layers 21, 20, 22. The same process can be used to form more or fewer layers based upon the desired physical requirements. Also, scrap from the co-extrusion blow molding process may be recycled into the middle layer 20 or whichever layer is the thicker of the three layers. Thus, the middle layer 20 or the thicker layer may include scrap material from the thinner layers 21, 22. Such a recycling step, of course, reduces manufacturing costs, and waste.

In addition to the co-extrusion blow molding process described above, a co-injection molding process can be employed whereby an injection mold is used to form the part 26, 27 and two or more, preferably three, materials are injected into the mold to form separate skins.

The multilayer parts 26, 27 can also be fabricated using an overmolding process wherein one layer is injection molded and then transferred to a separate mold where another material layer is then injected over the originally molded layer. The process is repeated for the number of layers desired. Adhesives may be required between the layers if this process is employed.

In addition, the three-layer structure illustrated in Fig. 1 can be provided in sheet form and then thermally formed to provide part 26 and/or 27.

Further, combinations of injection molding and blow molding techniques can be employed. For example, an injection molded preform could be transferred to a blow mold, and inflated to form an outer layer of the part 26, 27, before a second preform is transferred to the same mold and inflated inside the previously molded layer to form an inner or middle layer. The process is then repeated for the number of layers desired.

The foregoing detailed description is given for clearness of understanding only, and no unnecessary limitation should be understood therefrom, as modifications within the scope of the invention may become apparent to those skilled in the art.

## Claims

1. A reusable, three-dimensional storage container comprising:
a middle layer comprising a polymeric material selected from the group consisting of high density polyethylenes, high density polyethylenes filled with calcium carbonate, and mixtures thereof; and,
inner and outer layers tied to opposing sides of the middle layer, the inner and outer layers comprising same or different polymeric materials selected from the group consisting of low density polyethylenes, linear low density polyethylenes, and mixtures thereof.

2. The storage container of claim 1, wherein the inner layer, middle layer, and outer layer are co-extruded and blow molded.

3. The storage container of claim 1, wherein the outer layer further comprises a colorant.

4. The storage container of claim 1, wherein the inner layer further comprises a colorant.

5. The storage container of claim 4, wherein the outer layer further comprises a colorant.

6. The storage container of claim 1, wherein a ratio of a thickness of the middle layer to a combined thickness of the inner and outer layers ranges from about 1:1 to about 4:1.

7. The storage container of claim 1, wherein the middle layer comprises high density polyethylene filled with calcium carbonate.

8. The storage container of claim 1, wherein the container is formed by co-extrusion blow molding using separate parisons for the inner, middle, and outer layers.

9. The storage container of claim 1, wherein the middle layer further comprises scrap polymeric material of the inner and outer layers.

10. The storage container of claim 1, wherein the inner layer further comprises an anti-microbial agent.

11. The storage container of claim 1, wherein the outer layer further comprises an anti-microbial agent.

12. The storage container of claim 1, comprising a container portion, the middle, inner, and outer layers of which are molded to form a bottom panel connected to and disposed between two opposing side panels and two opposing end panels, each side panel being disposed between and connected to the opposing end panels to form an open top-box structure; and a top portion, the middle, inner, and outer layers of which are molded to form a top panel that engages top edges of the side and end panels of the container portion to provide a lid for the open box structure.

13. The storage container of claim 12, wherein the inner and outer layers of the container and the top portion further comprise a colorant.

14. The storage container of claim 12, wherein a ratio of a thickness of the middle layer to a combined thickness of the inner and outer layers of the container portion ranges from about 1:1 to about 4:1.

15. The storage container of claim 12, wherein a ratio of a thickness of the middle layer to a combined thickness of the inner and outer layers of the top portion ranges from about 3:2 to about 4:1.

16. The storage container of claim 12, wherein the middle layers of the container and the top portion comprise high density polyethylene filled with calcium carbonate.

17. The storage container of claim 12, wherein the container portion is coextruded and blow molded.

18. The storage container of claim 12, wherein the top portion is coextruded and blow molded.

19. The storage container of claim 1, wherein the middle, inner, and outer layers are molded to form a bottom panel connected to an disposed between two opposing side panels and two opposing end panels, each side panel being disposed between and connected to the opposing end panels to form an open top box structure.

20. The storage container of claim 19, wherein the inner and outer layers further comprise a colorant.

21. The storage container of claim 19, wherein a ratio of a thickness of the middle layer to a combined thickness of the inner and outer layers ranges from about 1:1 to about 4:1.

22. The storage container of claim 19, wherein the middle layer comprises high density polyethylene filled with calcium carbonate.

23. A top for a reusable, three-dimensional open box-type storage container comprising:
a middle layer comprising a polymeric material selected from the group consisting of high density polyethylenes, high density polyethylenes filled with calcium carbonate, and mixtures thereof,
inner and outer layers tied to opposing sides of the middle layer, the inner and outer layers comprising same or different polymeric materials selected from the group consisting of low density polyethylenes, linear low density polyethylenes, and mixtures thereof,
the middle, inner, and outer layers being molded to form a top panel that engages an open box-type storage container.

24. The top of claim 23, wherein the inner and outer layers further comprise a colorant.

25. The top of claim 23, wherein a ration of a thickness of the middle layer to a combined thickness of the inner and outer layers ranges from about 1:1 to about 4:1.

## Patentansprüche

1. Wiederverwendbarer, dreidimensionaler Aufbewahrungsbehälter, welcher umfaßt:
eine mittlere Schicht, die ein polymeres Material ausgewählt aus der Gruppe bestehend aus Polyethylenen hoher Dichte, Polyethylenen hoher Dichte, die mit Calciumcarbonat gefüllt sind, und Mischungen derselben umfaßt; und
innere und äußere Schichten, die an gegenüberliegenden Seiten der mittleren Schicht angebunden sind, wobei die inneren und äußeren Schichten gleiche oder unterschiedliche polymere Materialien umfassen, die ausgewählt sind aus der Gruppe bestehend aus Polyethylenen niedriger Dichte, linearen Polyethylenen niedriger Dichte und Mischungen derselben.

2. Aufbewahrungsbehälter nach Anspruch 1, wobei die innere Schicht, die mittlere Schicht und die äußere Schicht coextrudiert und blasgeformt sind

3. Autbewahrungsbehälter nach Anspruch 1, wobei die äußere Schicht ferner ein Farbmittel umfaßt.

4. Aufbewahrungsbehälter nach Anspruch 1, wobei die innere Schicht ferner ein Farbmittel umfaßt.

5. Aufbewahrungsbehälter nach Anspruch 4, wobei die äußere Schicht ferner ein Farbmittel umfaßt.

6. Aufbewahrungsbehälter nach Anspruch 1, wobei ein Dickenverhältnis der mittleren Schicht zu einer kombinierten Dicke der inneren und äußeren Schichten von etwa 1:1 bis etwa 4:1 reicht.

7. Aufbewahrungsbehälter nach Anspruch 1, wobei die mittlere Schicht Polyethylen hoher Dichte umfaßt, das mit Calciumcarbonat gefüllt ist.

8. Aufbewahrungsbehälter nach Anspruch 1, wobei der Behälter durch Co-Extrusionsblasformung unter Verwendung getrennter Extrudate für die inneren, mittleren und äußeren Schichten gebildet ist.

9. Aufbewahrungsbehälter nach Anspruch 1, wobei die mittlere Schicht ferner polymeres Altmaterial der inneren und äußeren Schichten umfaßt.

10. Aufbewahrungsbehälter nach Anspruch 1, wobei die innere Schicht ferner ein antimikrobielles Agens umfaßt.

11. Aufbewahrungsbehälter nach Anspruch 1, wobei die äußere Schicht ferner ein antimikrobielles Agens umfaßt.

12. Aufbewahrungsbehälter nach Anspruch 1, umfassend einen Behälterbereich, dessen mittleren, inneren und äußeren Schichten geformt sind, um eine Bodenplatte zu bilden, die verbunden ist mit und angeordnet ist zwischen zwei gegenüberliegenden Seitenplatten und zwei gegenüberliegenden Stirnplatten, wobei jede Seitenplatte angeordnet ist zwischen und verbunden ist mit gegenüberliegenden Stirnplatten, um eine oben offene Kistenstruktur zu bilden; und einen oberen Bereich, dessen mittleren, inneren und äußeren Schichten geformt sind, um eine obere Platte zu bilden, die mit den oberen Rändern der Seiten- und Stirnplatten des Behälterbereichs in Eingriff ist, um einen Deckel für die offene Kistenstruktur bereitzustellen.

13. Aufbewahrungsbehälter nach Anspruch 12, wobei die inneren und äußeren Schichten des Behälters und des oberen Bereichs ferner ein Farbmittel umfassen.

14. Aufbewahrungsbehälter nach Anspruch 12, wobei ein Dickenverhältnis der mittleren Schicht zu einer kombinierten Dicke der inneren und äußeren Schichten des Behälterbereichs von etwa 1:1 bis etwa 4:1 reicht.

15. Aufbewahrungsbehälter nach Anspruch 12, wobei ein Dickenverhältnis der mittleren Schicht zu einer kombinierten Dicke der inneren und äußeren Schichten des oberen Bereichs von etwa 3:2 bis etwa 4:1 reicht.

16. Aufbewahrungsbehälter nach Anspruch 12, wobei die mittleren Schichten des Behälters und des oberen Bereichs Polyethylen hoher Dichte umfassen, das mit Calciumcarbonat gefüllt ist.

17. Aufbewahrungsbehälter nach Anspruch 12, wobei der Behälterbereich coextrudiert und blasgeformt ist.

18. Aufbewahrungsbehälter nach Anspruch 12, wobei der obere Bereich coextrudiert und blasgeformt ist.

19. Aufbewahrungsbehälter nach Anspruch 1, wobei die mittleren, inneren und äußeren Schichten geformt sind, um eine Bodenplatte zu bilden, die verbunden ist mit und angeordnet ist zwischen zwei gegenüberliegenden Seitenplatten und gegenüberliegenden Stirnplatten, wobei jede Seitenplatte angeordnet ist zwischen und verbunden ist mit den gegenüberliegenden Stirnplatten, um eine oben offene Kistenstruktur zu bilden.

20. Aufbewahrungsbehälter nach Anspruch 19, wobei die inneren und äußeren Schichten ferner ein Farbmittel umfassen.

21. Aufbewahrungsbehälter nach Anspruch 19, wobei ein Dickenverhältnis der mittleren Schicht zu einer kombinierten Dicke der inneren und äußeren Schichten von etwa 1:1 bis etwa 4:1 reicht.

22. Aufbewahrungsbehälter nach Anspruch 19, wobei die mittlere Schicht Polyethylen hoher Dichte umfaßt, das mit Calciumcarbonat gefüllt ist.

23. Oberteil für einen wiederverwendbaren, dreidimensionalen, offenen, kistenartigen Aufbewahrungsbehälter, welches umfaßt:
eine mittlere Schicht, die ein polymeres Material umfaßt, das ausgewählt ist aus der Gruppe bestehend aus Polyethylenen hoher Dichte, Polyethylenen hoher Dichte, die mit Calciumcarbonat gefüllt sind, und Mischungen derselben,
innere und äußere Schichten, die an gegenüberliegenden Seiten der mittleren Schicht angebunden sind, wobei die inneren und äußeren Schichten gleiche oder unterschiedliche polymere Materialien umfassen, die ausgewählt sind aus der Gruppe bestehend aus Polyethylenen niedriger Dichte, linearen Polyethylenen niedriger Dichte und Mischungen derselben,
wobei die mittleren, inneren und äußeren Schichten geformt sind, um eine obere Platte zu bilden, die mit einem offenen, kistenartigen Aufbewahrungsbehälter in Eingriff ist.

24. Oberteil nach Anspruch 23, wobei die inneren und äußeren Schichten ferner ein Farbmittel umfassen.

25. Oberteil nach Anspruch 23, wobei ein Dickenverhältnis der mittleren Schicht zu einer kombinierten Dicke der inneren und äußeren Schichten von etwa 1:1 bis etwa 4:1 reicht.

## Revendications

1. Récipient de stockage tridimensionnel réutilisable comprenant :
une couche médiane comprenant un matériau polymère choisi dans le groupe constitué par les polyéthylènes haute densité, les polyéthylènes haute densité chargés de carbonate de calcium, et leurs mélanges ; et
des couches intérieure et extérieure liées aux côtés opposés de la couche médiane, les couches intérieure et extérieure comprenant des matériaux polymères identiques ou différents choisis dans le groupe constitué par les polyéthylènes basse densité, les polyéthylènes basse densité linéaires, et leurs mélanges.

2. Récipient de stockage selon la revendication 1, dans lequel la couche intérieure, la couche médiane, et la couche extérieure sont coextrudées et moulées par soufflage.

3. Récipient de stockage selon la revendication 1, dans lequel la couche extérieure comprend en outre un colorant.

4. Récipient de stockage selon la revendication 1, dans lequel la couche intérieure comprend en outre un colorant.

5. Récipient de stockage selon la revendication 4, dans lequel la couche extérieure comprend en outre un colorant.

6. Récipient de stockage selon la revendication 1, dans lequel le rapport de l'épaisseur de la couche médiane à l'épaisseur combinée des couches intérieure et extérieure est situé dans la plage allant d'environ 1/1 à environ 4/1.

7. Récipient de stockage selon la revendication 1, dans lequel la couche médiane comprend un polyéthylène haute densité chargé de carbonate de calcium.

8. Récipient de stockage selon la revendication 1, dans lequel le récipient est formé par moulage par coextrusion-soufflage utilisant des paraisons séparées pour les couches intérieure, médiane, et extérieure.

9. Récipient de stockage selon la revendication 1, dans lequel la couche médiane comprend en outre un matériau polymère résiduel des couches intérieure et extérieure.

10. Récipient de stockage selon la revendication 1, dans lequel la couche intérieure comprend en outre un agent antimicrobien.

11. Récipient de stockage selon la revendication 1, dans lequel la couche extérieure comprend en outre un agent antimicrobien.

12. Récipient de stockage selon la revendication 1, comprenant une partie de récipient, dont les couches médiane, intérieure et extérieure sont moulées pour former un panneau de fond connecté à deux panneaux latéraux opposés et deux panneaux d'extrémité opposés et disposé entre ceux-ci, chaque panneau latéral étant disposé entre et connecté aux panneaux d'extrémité opposés pour former une structure de boîte à sommet ouvert ; et une partie supérieure, dont les couches médiane, intérieure et extérieure sont moulées pour former un panneau supérieur qui vient en prise avec les bords supérieurs des panneaux latéraux et d'extrémité de la partie de récipient afin de former un rebord pour la structure de boîte ouverte.

13. Récipient de stockage selon la revendication 12, dans lequel les couches intérieure et extérieure du récipient et la partie supérieure comprennent en outre un colorant.

14. Récipient de stockage selon la revendication 12, dans lequel le rapport de l'épaisseur de la couche médiane à l'épaisseur combinée des couches intérieure et extérieure de la partie de récipient est situé dans la plage allant d'environ 1/1 à environ 4/1.

15. Récipient de stockage selon la revendication 12, dans lequel le rapport de l'épaisseur de la couche médiane à l'épaisseur combinée des couches intérieure et extérieure de la partie supérieure est situé dans la plage allant d'environ 3/2 à environ 4/1.

16. Récipient de stockage selon la revendication 12, dans lequel les couches médianes du récipient et de la partie supérieure comprennent du polyéthylène haute densité chargé de carbonate de calcium.

17. Récipient de stockage selon la revendication 12, dans lequel la partie de récipient est coextrudée et moulée par soufflage.

18. Récipient de stockage selon la revendication 12, dans lequel la partie supérieure est coextrudée et moulée par soufflage.

19. Récipient de stockage selon la revendication 1, dans lequel les couches médiane, intérieure et extérieure sont moulées pour former un panneau de fond connecté à deux panneaux latéraux opposés et deux panneaux d'extrémité opposés et disposé entre ceux-ci, chaque panneau latéral étant disposé entre les panneaux d'extrémité et connecté à ceux-ci pour former une structure de boîte à sommet ouvert.

20. Récipient de stockage selon la revendication 19, dans lequel les couches intérieure et extérieure comprennent en outre un colorant.

21. Récipient de stockage selon la revendication 19, dans lequel le rapport de l'épaisseur de la couche médiane à l'épaisseur combinée des couches intérieure et extérieure est situé dans la plage allant d'environ 1/1 à environ 4/1.

22. Récipient de stockage selon la revendication 19, dans lequel la couche médiane comprend un polyéthylène haute densité chargé de carbonate de calcium.

23. Couvercle pour un récipient de stockage de type boîte ouverte tridimensionnelle réutilisable comprenant :
une couche médiane comprenant un matériau polymère choisi dans le groupe constitué par les polyéthylènes haute densité, les polyéthylènes haute densité chargés de carbonate de calcium, et leurs mélanges,
des couches intérieure et extérieure liées à des côtés opposés de la couche médiane, les couches intérieure et extérieure comprenant des matériaux polymères identiques ou différents choisis dans le groupe constitué par les polyéthylènes basse densité, les polyéthylènes basse densité linéaires, et leurs mélanges,
les couches médiane, intérieure et extérieure étant moulées pour former un panneau supérieur qui vient en prise avec un récipient de stockage de type boîte ouverte.

24. Couvercle selon la revendication 23, dans lequel les couches intérieure et extérieure comprennent en outre un colorant.

25. Couvercle selon la revendication 23, dans lequel le rapport de l'épaisseur de la couche médiane à l'épaisseur combinée des couches intérieure et extérieure est situé dans la plage allant d'environ 1/1 à environ 4/1.
